Europäisches Patentamt

European Patent Office

Office européen des brevets

(19)

(11) Veröffentlichungsnummer : **0 025 910**
**B1**

(12)

# EUROPÄISCHE PATENTSCHRIFT

(45) Veröffentlichungstag der Patentschrift : **22.06.83**

(51) Int. Cl.³ : **F 15 B 21/04, B 01 D 19/00**

(21) Anmeldenummer : **80105242.4**

(22) Anmeldetag : **03.09.80**

(54) Verfahren und Vorrichtung zur Entgasung der Druckflüssigkeit eines Hydrauliksystems.

(30) Priorität : **20.09.79 DE 2937957**

(43) Veröffentlichungstag der Anmeldung :
**01.04.81 Patentblatt 81/13**

(45) Bekanntmachung des Hinweises auf die Patenterteilung : **22.06.83 Patentblatt 83/25**

(84) Benannte Vertragsstaaten :
**AT CH FR GB IT LI**

(56) Entgegenhaltungen :
**DE A 2 221 551**
**DE B 1 163 486**
**US A 2 944 626**
**ÖLHYDRAULIK UND PNEUMATIK 16, 1972, Nr. 9,**
**Krausskopf-Verlag Mainz, DE K. BLUME : « Luft**
**im Hydrauliksystem », Seiten 389-392**

(73) Patentinhaber : **Bürger, Herbert**
**Berliner Ring 50**
**D-6980 Wertheim (DE)**

(72) Erfinder : **Bürger, Herbert**
**Berliner Ring 50**
**D-6980 Wertheim (DE)**

(74) Vertreter : **Liebau, Gerhard, Dipl.-Ing.**
**Birkenstrasse 39**
**D-8900 Augsburg 22 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 025 910 B1

Verfahren und Vorrichtung zur Entgasung der Druckflüssigkeit eines Hydrauliksystems

Die Erfindung betrifft ein Verfahren und eine Vorrichtung zur Entgasung der Druckflüssigkeit eines Hydrauliksystems, wobei im freien Raum über der Druckflüssigkeit eines diese enthaltenden Sammelbehälters mittels einer Vakuumpumpe ein Vakuum erzeugt wird und damit die in der Druckflüssigkeit enthaltenen Permanentgase kontinuierlich abgesaugt werden.

Bekanntlich richtet sich die Menge gelöster Permanentgase in Flüssigkeiten nach dem Druck, der an der Kontaktfläche zwischen Gas und Flüssigkeit herrscht. Sie ist dem Druck direkt proportional. Ein verminderter Gehalt an Permanentgasen in der Druckflüssigkeit von Hydrauliksystemen ist wünschenswert, damit die Druckflüssigkeit möglichst inkompressibel und die Folgefähigkeit der Elemente des Hydrauliksystems möglichst exakt wird. Außerdem sollen durch die Entgasung Gaskavitation (Pseudokavitation), Dieseleffekt und Ansammlungen von Luftblasen innerhalb des Hydrauliksystems vermieden werden.

Bei einem bekannten Verfahren und einer bekannten Einrichtung zur Entgasung der Druckflüssigkeit eines Hydrauliksystems der eingangs erwähnten Art (DE-A-2 221 551) steht der freie Raum eines Sammelbehälters für die Druckflüssigkeit des Hydrauliksystems nicht wie allgemein üblich, mit der umgebenden Atmosphäre in Verbindung, sondern mit einer Vakuumpumpe, die in diesem freien Raum oberhalb des Flüssigkeitsspiegels einen Unterdruck erzeugt und aufrechterhält. Hierdurch verringert sich der Anteil von Permanentgasen in der Druckflüssigkeit im gleichen Verhältnis wie der Druck im Sammelbehälter gegenüber dem Atmosphärendruck. Dieses bekannte Entgasungsverfahren konnte sich jedoch in der Praxis nicht durchsetzen, da die Entgasung im Verhältnis zu dem konstruktiven Aufwand ungenügend war. Um nämlich Verdampfungsverluste der Druckflüssigkeit und damit verbundene Eigenschaftsänderungen, z. B. Viskositätsanstieg und Anstieg des Stockpunktes, zu vermeiden, wurde vorgeschlagen, das Vakuum im Sammelbehälter in Abhängigkeit von dem Siedepunkt der Druckflüssigkeit zu begrenzen. Diese Begrenzung des Vakuums verhindert jedoch eine hinreichend wirksame Entgasung der Druckflüssigkeit. Es genügt z. B. nicht, den Sättigungsdruck der gelösten Permanentgase vom Normalzustand, also 1 bar auf 0,45 bar oder äußerstenfalls auf 0,13 bar zu senken, wie es in der Fachliteratur (Kurt Blume « Luft im Hydrauliksystem, Zeitschrift Ölhydraulik und Pneumatik 16, 1972, Nr. 9, Seiten 389-392) angegeben ist. Experimentelle Untersuchungen haben nämlich gezeigt, daß an Drosselstellen und scharfkantigen Strömungsumlenkungen der Druck in der Druckflüssigkeit innerhalb des Hydrauliksystems auf Werte um 1 mbar abfallen kann und zwar unter Bedingungen, wie sie in fast jedem konventionellen Hydrauliksystem vorliegen. Wenn demgegenüber für bekannte Vakuum-Entgasungseinrichtungen ein höchst zulässiges Vakuum von 0,13 bar = 130 mbar gefordert wird, dann ist der Sättigungsdruck der gelösten Luft oder sonstiger Permanentgase in der Druckflüssigkeit des Hydrauliksystems immer noch um den Faktor 130 zu hoch. Es kommt dann trotz der Entgasung zu Gaskavitation, Dieseleffekt und zur Ansammlung von Luftblasen innerhalb des Hydrauliksystems mit den bekannten nachteiligen Folgen. Es ist ohne weiteres klar, daß bei solchermaßen begrenzter Wirksamkeit der zusätzliche Aufwand für eine Vakuum-Entgasungsvorrichtung der bekannten Art wirtschaftlich nicht vertretbar ist. Allein die bei der bekannten Vorrichtung notwendige Begrenzung des Unterdruckes nach unten und die Regelung auf einen hinreichend konstanten Wert erfordert einen beträchtlichen konstruktiven Aufwand und bringt zusätzliche Störungsquellen in die Gesamtanlage.

Der Erfindung liegt die Aufgabe zugrunde, ein Verfahren und eine Vorrichtung zur Entgasung der Druckflüssigkeit eines Hydrauliksystems der eingangs erwähnten Art zu schaffen, bei welchen mit einfachen Mitteln eine weitgehende Entgasung ohne unzulässige Verdampfungsverluste, Viskositätsanstieg und andere unerwünschte Veränderungen der Druckflüssigkeit im Hydrauliksystems erreicht wird.

Diese Aufgabe wird nach der Erfindung dadurch gelöst, daß mittels einer Vakuumpumpe mit selektiver Wirkung, die zwar Permanentgase, nicht jedoch den Dampf der jeweiligen Druckflüssigkeit pumpt, der Partialdruck der Permanentgase im freien Raum des Sammelbehälters auf einen möglichst niedrigen Wert abgesenkt wird.

Die Vorteile des erfindungsgemäßen Verfahrens sind äußerst vielfältig und bewirken eine sprunghafte Verbesserung der Qualität hydraulischer Systeme. Gegenüber bereits bekannten Verfahren zur Entgasung der Druckflüssigkeit eines Hydrauliksystems bietet das erfindungsgemäße Verfahren den entscheidenden Vorteil der wirklich vollständigen Entgasung der Druckflüssigkeit. Gleichzeitig wird eine unzulässige Verdampfung dieser Flüssigkeit vermieden. Gaskavitation mit ihren gefürchteten Folgen wird mit Sicherheit unterbunden. Damit wird die Lebensdauer der kostspieligsten Komponenten hydraulischer Anlagen erhöht. Die praktisch gasfreie Druckflüssigkeit kann an keiner Stelle im Systemkreis Gas bzw. Luft ausscheiden. Das dynamische Verhalten des Hydrauliskystems wird verbessert. Die Verstärkung von Schwingungen und Druckstößen und die damit verbundenen Geräusche infolge der in komprimierten Gasblasen gespeicherten Energie wird verhindert. Die häufigste Ausfall-Ursache von Dichtungen — Dieseleffekt und explosionsartig expandierende Gasblasen — ist eliminiert.

Ein bedeutender Vorteil der Erfindung besteht auch darin, daß die Gesamtmenge der im Hydrauliksystem erforderlichen Druckflüssigkeit drastisch gesenkt werden kann. Weil wegen der wirksamen Entgasung im Sammelbehälter keine Verweilzeit erforderlich ist, braucht der Flüssigkeitsvorrat im Sammelbehälter nur so groß gewählt zu werden, wie die maximalen Volumenschwankungen im System es erfordern, zusätzlich einer Reserve für unvermeidliche Leckverluste. Dies ergibt nur einen kleinen Bruchteil der Menge, die in konventionellen Systemen mit unter Atmosphärendruck stehendem Sammelbehälter notwendig ist. Dieser Vorteil verringert nicht nur die Kosten und das Bauvolumen hydraulischer Systeme, sondern verkleinert vor allem auch die Gefahren, die mit brennbaren und umweltschädlichen Hydraulikflüssigkeiten verbunden sind.

Ein wichtiger Vorteil der Erfindung besteht auch in der Möglichkeit, die Betriebstemperatur der Druckflüssigkeit innerhalb des Systemteils höher zu wählen als bisher üblich und möglich. Diese Temperaturerhöhung kann aus technischen oder wirtschaftlichen Gründen wünschenswert sein. Da durch die nahezu vollkommene Entgasung eine oxydationsbedingte Alterung der Druckflüssigkeit unterbleibt, hat eine Temperaturerhöhung auch keinen nachteiligen Einfluß auf deren Lebensdauer.

Der erforderliche konstruktive Aufwand für die Vakuum-Entgasung wird durch die Erfindung ebenfalls verringert. Es ist weder ein zusätzlicher Vakuum-Pufferbehälter erforderlich noch eine aufwendige Regeleinrichtung zur Begrenzung des Vakuums.

Vorzugsweise wird der Partialdruck der Permanentgase im freien Raum des Sammelbehälters unter 1 mbar gehalten.

Die Permanentgase werden vorzugsweise mittels einer flüssigkeitsgedichteten Vakuumpumpe abgesaugt, deren Betriebsflüssigkeit (Schmier- und Dichtflüssigkeit) die Druckflüssigkeit des Hydrauliksystems ist. Eine derartige Vakuumpumpe ist für sich bereits aus der DE-B-1 163 486 bekannt.

Derartige flüssigkeitsgedichtete Vakuumpumpen haben, wenn in ihnen als Betriebsflüssigkeit die gleiche Flüssigkeit verwendet wird, wie die Druckflüssigkeit des Hydrauliksystems, die gewünschte selektive Wirkung. Bei derartigen Pumpen dient die verwendete Betriebsflüssigkeit nicht nur zur Schmierung, sondern vor allen Dingen zur Abdichtung. Die komplexe Funktion der Betriebsflüssigkeit ermöglicht erst ihr hohes Endvakuum für Permanentgase, das bei einer einstufigen Ausführung Werte von unter 0,01 mbar erreicht. Dazu ist es u. a. notwendig, kontinuierlich Betriebsflüssigkeit in reichlicher Menge in den Schöpfraum einzuleiten, so daß mit zunehmendem Vakuum, also wenn die geförderte Gasmenge sehr klein wird, sich im Schöpfraum praktisch nur noch diese Betriebsflüssigkeit befindet. Unter dem dort herrschenden Vakuum kann dann die Betriebsflüssigkeit vor allem in der Saugzone ungehindert verdampfen. Am Saugstutzen solcher Pumpen herrscht also der Sättigungsdampfdruck der Betriebsflüssigkeit entsprechend der Pumpen Betriebstemperatur.

Wird nun gemäß der Erfindung für solche flüssigkeitsgedichtete Vakuumpumpen die gleiche Betriebsflüssigkeit verwendet wie die Druckflüssigkeit im angeschlossenen Hydrauliksystem und hat die Druckflüssigkeit im Sammelbehälter des Hydrauliksystems in etwa die gleiche Temperatur wie die Betriebsflüssigkeit in der Vakuumpumpe, so kann kein Dampf der Druckflüssigkeit aus dem Sammelbehälter in die Vakuumpumpe gefördert werden, denn es herrscht dann Dampfdruck-Gleichgewicht zwischen der Druckflüssigkeit im Sammelbehälter und der gleichen Flüssigkeit in der Vakuumpumpe. Die Pumpwirkung der Vakuumpumpe für Permanentgase hingegen wird dadurch nach dem Dalton'schen Gesetz in keiner Weise beeinträchtigt. Hierdurch kann der Partialdruck der Permantentgase im freien Raum des Sammelbehälters auf beliebig niedrige Werte reduziert werden. Dank der dadurch erreichten weitgehenden Entgasung der Druckflüssigkeit werden dann Gaskavitation, Dieseleffekt und Ansammlungen von Luftblasen innerhalb des Hydrauliksystems sowie die hiermit verbundenen Folgen wirksam vermieden.

Eine Vorrichtung zur Durchführung des Verfahrens nach einem der Ansprüche 1 bis 6 mit einem Sammelbehälter für die Druckflüssigkeit und einer an diesen angeschlossenen Vakuumpumpe ist dadurch gekennzeichnet, daß die Vakuumpumpe eine flüssigkeitsgedichtete Vakuumpumpe ist, deren Betriebsflüssigkeit (Schmier- und Dichtflüssigkeit) die gleiche ist wie die Druckflüssigkeit des Hydrauliksystems, wobei die Temperatur der Betriebsflüssigkeit der Vakuumpumpe in etwa der Temperatur der Druckflüssigkeit im Sammelbehälter entspricht.

Bei der Durchführung des Verfahrens ist es von Wichtigkeit, daß die Betriebsflüssigkeit der Vakuumpumpe möglichst auf der gleichen Temperatur gehalten wird wie die Druckflüssigkeit im Sammelbehälter, damit das erwähnte Dampfdruck gleichgewicht herrscht.

Da dieses Dampfdruck-Gleichgewicht in der Praxis nicht mit absoluter Genauigkeit ständig aufrechterhalten werden kann, ist bei einer vorteilhaften Ausgestaltung der erfindungsgemäßen Vorrichtung zur Durchführung des Verfahrens zwischen dem Sammelbehälter des Hydrauliksystems und einem Betriebsflüssigkeitsbehälter der Vakuumpumpe eine Ausgleichsleitung vorgesehen, deren eine Mündung unterhalb des Flüssigkeitsspiegels im Betriebsflüssigkeitsbehälter angeordnet ist und deren andere Mündung oberhalb des Flüssigkeitsspiegels im Sammelbehälter liegt, wobei in der Ausgleichsleitung ein in Abhängigkeit von dem Flüssigkeitsspiegel im Betriebsflüssigkeitsbehälter gesteuertes Ventil vorgesehen ist.

Diese Vorrichtung stellt sicher, daß in jedem Fall, also auch unter Ausnahmebedingungen und in Störfällen aus dem Sammelbehälter in die Vakuumpumpe gelangende Druckflüssigkeit unmittelbar wieder zurückgeführt wird. Ein vorzugsweise mit dem Ventil verbundener, im Betriebsflüssigkeitsbehälter angeordneter Schwimmer oder eine andere geeignete Vorrichtung öffnet bei einem Niveauanstieg der Betriebsflüssigkeit im Betriebsflüssigkeitsbehälter der Vakuumpumpe das Ventil der Ausgleichsleitung so lange, bis der Flüssigkeitsspiegel in dem Betriebsflüssigkeitsbehälter wieder auf das normale Niveau zurückgegangen ist. Da die Betriebsflüssigkeit im Betriebsflüssigkeitsbehälter der Vakuumpumpe unter Atmosphärendruck steht, der Sammelbehälter jedoch unter Vakuum, genügt diese Druckdifferenz allein zur Rückführung der Druckflüssigkeit in den Sammelbehälter. Diese Anordnung funktioniert natürlich auch, wenn Druckflüssigkeit in Dampfform aus dem Sammelbehälter in die Vakuumpumpe gelangt. Das hohe Kompressionsverhältnis in dieser Pumpe führt mit Sicherheit zu einer Verflüssigung dieses Dampfes noch im Schöpfraum der Pumpe.

Weitere vorteilhafte Verfahrensweisen und Ausgestaltungen der Vorrichtung sind in den übrigen Unteransprüchen beschrieben.

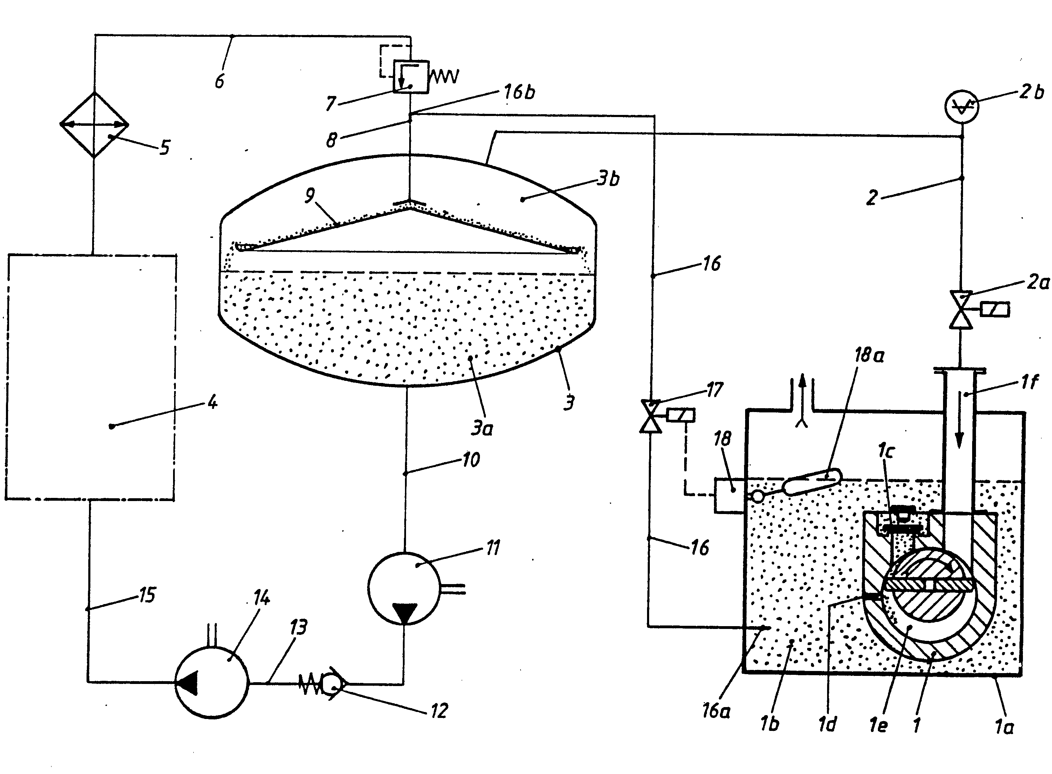

Anhand der beiliegenden Zeichnung wird das Verfahren und ein Ausführungsbeispiel einer Vorrichtung zur Durchführung des Verfahrens in folgendem näher erläutert.

Die in bekannter Weise aufgebaute flüssigkeitsgedichtete Drehkolben-Vakuumpumpe 1 in Drehschieberbauart mit dem Betriebsflüssigkeitsbehälter 1a, der Betriebsflüssigkeit 1b, die als punktierte Fläche dargestellt ist, dem Auslaßventil 1c, der Bohrung 1d zur Betriebsflüssigkeitseinleitung in den Schöpfraum 1e ist über den Saugstutzen 1f mittels der Vakuumeinleitung 2 mit dem Sammelbehälter 3 des Hydrauliksystems verbunden. In die Vakuumleitung 2 ist das Ventil 2a eingebaut, um zu verhindern, daß beim Stillsetzen der Vakuumpumpe Betriebsflüssigkeit oder Luft in den Sammelbehälter 3 übertritt. Das Vakuummeter 2b dient zur Kontrolle des Druckes im Sammelbehälter 3.

Dieser Sammelbehälter 3 ist vakuumdicht ausgeführt und nur zum Teil mit einem Vorrat 3a der Druckflüssigkeit (Hydraulikflüssigkeit), die als punktierte Fläche dargestellt ist, gefüllt. Der freie Raum 3b steht unter Vakuum. Der Hydrauliksystemteil 4, dargestellt lediglich als strichpunktiert begrenztes Rechteck ohne Einzelheiten, enthält alle in bekannter Art und Schaltung für die jeweilige Arbeitsaufgabe benötigten Motoren, Steuer- und Regelorgane und sonstige Bauelemente. Dieser Hydrauliksystemteil 4 braucht sich in keiner Weise von jedem beliebigen Hydrauliksystem bekannter Art zu unterscheiden, dessen Sammelbehälter wie allgemein üblich unter Atmosphärendruck steht. Die Erfindung kann also ohne weiteres auch an bereits vorhandenen Hydraulikanlagen genutzt werden. Die Betriebsflüssigkeit 1b und die Druckflüssigkeit 3a sind die gleichen, nämlich z. B. Hydrauliköl.

Aus dem Hydraulik-Systemteil 4 strömt die mit der Verlustwärme behaftete Druckflüssigkeit in den Kühler 5. Dieser Kühler ist für die erfindungsgemäße Anordnung wichtig, weil deren Sammelbehälter 3 wesentlich kleiner gehalten werden kann als bei bekannten Anlagen, so daß ein Wärmeaustausch im Sammelbehälter 3 selbst nicht sinnvoll ist. Die bereits abgekühlte, über die Rückleitung 6, 8 und das Druckventil 7 in den Sammelbehälter 3 gelangende Druckflüssigkeit strömt über den bereits unter Vakuum stehenden Leitungsteil 8 zunächst auf eine Dünnschicht-Entgasungsfläche 9, die im Zeichnungsbeispiel als Kegelmantel dargestellt ist. Diese Anordnung dient der optimalen Entgasung der Druckflüssigkeit, bevor sie vom Flüssigkeitsvorrat 3a aufgenommen wird. Die Abkühlung der Druckflüssigkeit im Kühler 5, bereits vor Eintritt in den evakuierten Sammelbehälter 3, hat keinen nachteiligen Einfluß auf die Wirksamkeit der Entgasung, da der Bunsen'sche Lösungskoeffizient z. B. für Luft in Hydrauliköl zwischen 0 °C und 100 °C praktisch konstant bleibt.

Das Druckventil 7 hat die Aufgabe, den Druck in der Rückleitung 6, dem Kühler 5 und im Rücklaufbereich des Systemteils 4 auf etwas mehr als 1 bar konstant zu halten, damit nicht infolge Unterdrucks durch kleine Lecks in Leitungskupplungen usw. Luft eintritt, die das Vakuum im Sammelbehälter 3 verschlechtern würde.

Aus dem Sammelbehälter 3 tritt die Druckflüssigkeit über die Leitung 10 zunächst in die Zubringerpumpe 11, die z. B. als Kreiselpumpe ausgebildet ist, weiter über das Rückschlagventil 12 und die Leitung 13 in die Haupt-Hydraulikpumpe 14. Diese leitet die unter Druck gesetzte Druckflüssigkeit durch die Druckleitung 15 in den Systemteil 4, womit der Kreislauf geschlossen ist. Die Anordnung der Zubringerpumpe 11 ist insoweit bekannt und in der Regel erforderlich, wenn als Hauptpumpe 14 eine dem Stand der Technik entsprechende Hydraulikpumpe eingesetzt wird, die zum Ansaugen einen bestimmten Mindest-Fülldruck benötigt, um Wirkungsgrad-Verluste zu vermeiden. Die Zubringerpumpe 11 kann entfallen, wenn der Sammelbehälter 3 hinreichend hoch über der Hauptpumpe 14 angeordnet wird, so daß die dadurch gegebene Flüssigkeitssäule für ausreichenden Fülldruck sorgt. Der Fülldruck kann jedoch dabei wesentlich niedriger gehalten werden als bei konventionellen Anordnungen der Hydraulikpumpe, da die Gefahr der Gaskavitation in einer erfindungsgemäßen Anordnung nicht besteht.

Das Rückschlagventil 12 sichert den Sammelbehälter gegen rückströmende Druckflüssigkeit aus dem Überdruckbereich des Systems, z. B. wenn die Hydraulikpumpe 14 versagt. Es verhindert auch zusammen mit den Ventilen 2a und 7, daß beim Stillsetzen des gesamten Hydrauliksystems einschließlich Vakuumpumpe 1 der Druck im Sammelbehälter 3 ansteigt. Die Druckflüssigkeit 3a kann also auch in Betriebspausen keine Gase absorbieren. Beim Start des Hydrauliksystems steht sofort gasfreie Druckflüssigkeit zur Verfügung. Die eine Mündung 16a der Ausgleichsleitung 16 liegt hinreichend tief unter dem Flüssigkeitsspiegel im Betriebsflüssigkeitsbehälter 1a der Vakuumpumpe 1 und die andere Mündung 16b liegt an dem unter Vakuum stehenden Leitungsteil 8 zum Sammelbehälter 3. Das Ventil 17 wird über den Schwimmerschalter 18 mit dem Schwimmer 18a so gesteuert, daß eventuell aus dem Sammelbehälter 3 in die Vakuumpumpe 1 gelangte Druckflüssigkeit unmittelbar in den Sammelbehälter 3 zurückgeführt wird. Die Lage der Mündung 16b sorgt dafür, daß auch diese zurückgeführte Druckflüssigkeit auf der Entgasungsfläche 9 sorgfältig entgast wird.

Die Anordnung der Erfindung erstreckt sich auf alle für Hydrauliksysteme geeigneten Druckflüssigkeiten, auch auf die wasserhaltigen. Insbesondere bei letzteren muß allerdings dafür gesorgt werden, daß die Temperatur der Druckflüssigkeit im Sammelbehälter und in der Vakuumpumpe so niedrig wie möglich gehalten wird, damit der entsprechende Sättigungsdampfdruck der Druckflüssigkeit nicht zu Störungen im System führen kann.

Die Erfindung beschränkt sich nicht auf das beschriebene und in der Zeichnung dargestellte Ausführungsbeispiel. Anstelle der hierfür gewählten Drehkolben-Vakuumpumpe in Drehschieber-Bauart kann eine beliebige Vakuumpumpe benutzt werden, sofern sie die Eigenschaft besitzt, selekfiv Permanentgase bis zu möglichst niedrigen Drücken unter 1 mbar zu pumpen, gleichzeitig aber keine Pumpwirkung aufweist für den Dampf der benutzten Druckflüssigkeit.

**Ansprüche**

1. Verfahren zur Entgasung der Druckflüssigkeit eines Hydrauliksystems (4), wobei im freien Raum (3b) über der Druckflüssigkeit (3a) eines diese enthaltenden Sammelbehälters (3) mittels einer Vakuumpumpe (1) ein Vakuum erzeugt wird und damit die in der Druckflüssigkeit (3a) enthaltenen Permanentgase kontinuierlich abgesaugt werden, dadurch gekennzeichnet, daß mittels einer Vakuumpumpe (1) mit selektiver Wirkung, die zwar Permanentgase, nicht jedoch den Dampf der jeweiligen Druckflüssigkeit pumpt, der Partialdruck der Permanentgase im freien Raum (3b) des Sammelbehälters (3) auf einen möglichst niedrigen Wert abgesenkt wird.

2. Verfahren nach Anspruch 1, dadurch gekennzeichnet, daß der Partialdruck der Permanentgase im freien Raum (3b) des Sammelbehälters (3) unter 1 mbar gehalten wird.

3. Verfahren nach Anspruch 1 oder 2, dadurch gekennzeichnet, daß die Permanentgase mittels einer flüssigkeitsgedichteten Vakuumpumpe (1) abgesaugt werden, deren Betriebsflüssigkeit (1b) (Schmier- und Dichtflüssigkeit) die Druckflüssigkeit des Hydrauliksystems ist.

4. Verfahren nach Anspruch 3, dadurch gekennzeichnet, daß die Betriebsflüssigkeit (1b) der Vakuumpumpe (1) in etwa auf der gleichen Temperatur gehalten wird wie die Druckflüssigkeit (3a) im Sammelbehälter (3).

5. Verfahren nach einem der Ansprüche 1 bis 4, dadurch gekennzeichnet, daß die in den Sammelbehälter (3) aus dem Hydrauliksystem (4) und/oder der Vakuumpumpe (1) zurückgeleitete Druckflüssigkeit über eine Dünnschicht-Entgasungsfläche (9) geleitet wird.

6. Verfahren nach einem der Ansprüche 1 bis 5, dadurch gekennzeichnet, daß der Druckflüssigkeit die im Hydrauliksystem aufgenommene Wärme durch einen dem Sammelbehälter (3) vorgeschalteten Kühler (5) entzogen wird, bevor sie in den Sammelbehälter zurückgeleitet wird.

7. Vorrichtung zur Druchführung des Verfahrens nach einem der Ansprüche 1 bis 6, mit einem Sammelbehälter (3) für die Druckflüssigkeit (3a) und einer an diesen angeschlossene Vakuumpumpe (1), dadurch gekennzeichnet, daß die Vakuumpumpe eine flüssigkeitsgedichtete Vakuumpumpe (1) ist, deren Betriebsflüssigkeit (1b) (Schmier- und Dichtflüssigkeit) die gleiche ist wie die Druckflüssigkeit (3a) des Hydrauliksystems (4), wobei die Temperatur der Betriebsflüssigkeit (1b) der Vakuumpumpe (1) in etwa der Temperatur der Druckflüssigkeit (3a) im Sammelbehälter (3) entspricht.

8. Vorrichtung nach Anspruch 7, dadurch gekennzeichnet, daß zwischen dem Sammelbehälter (3) des Hydrauliksystems und einem Betriebsflüssigkeitsbehälter (1a) der Vakuumpumpe (1) eine Ausgleichsleitung (16) vorgesehen ist, deren eine Mündung (16a) unterhalb des Flüssigkeitsspiegels im Betriebsflüssigkeitsbehälter (1a) angeordnet ist, und deren andere Mündung (16b) oberhalb des Flüssigkeitsspiegels im Sammelbehälter (3) liegt, wobei in der Ausgleichsleitung (16) ein in Abhängigkeit von dem Flüssigkeitsspiegel im Betriebsflüssigkeitsbehälter (1a) gesteuertes Ventil (17) vorgesehen ist.

9. Vorrichtung nach Anspruch 8, dadurch gekennzeichnet, daß das Ventil (17) von einem im Betriebsflüssigkeitsbehälter angeordneten Schwimmer (18a) eines Schwimmerschalters (18) gesteuert ist.

10. Vorrichtung nach Anspruch 8 oder 9, dadurch gekennzeichnet, daß die Ausgleichsleitung (16) in die Rückleitung (8) des Hydrauliksystems vor dem Sammelbehälter (3) mündet.

**Claims**

1. Method for degassing the pressure fluid of a hydraulic system (4), wherein in the free space (3b) above the pressure fluid (3a) in a reservoir (3) containing said pressure fluid (3a) a vacuum is produced by means of a vacuum pump and with it the permanent gases which are contained in the pressure fluid (3a) are continuously removed, characterized in that by means of a vacuum pump (1) with a selective action which pumps permanent gases but does not pump the vapor of the respective pressure fluid, the partial pressure of the permanent gases in the free space (3b) of the reservoir (3) is lowered to a value which is as low as possible.

2. Method according to claim 1, characterized in that the partial pressure of the permanent gases in the free space (3b) of the reservoir (3) is kept under 1 mbar.

3. Method according to claim 1 or 2, characterized in that the permanent gases are sucked off by means of a liquid-sealed vacuum pump (1), the operating fluid (1b) (lubricating and sealing fluid) of which is the pressure fluid of the hydraulic system.

4. Method according to claim 3, characterized in that the operating fluid (1b) of the vacuum pump (1) is maintained at approximately the same temperature as the pressure fluid (3a) in the reservoir (3).

5. Method according to claim 1 or 2, characterized in that the pressure fluid which is returned into the reservoir (3) from the hydraulic system (4) and/or the vacuum pump (1) is passed over a thin-layer degassing surface (9).

6. Method according to claim 1 or 2, characterized in that the heat absorbed from the hydraulic system by the pressure fluid from said pressure fluid is extracted with a cooler (5) which is connected upstream of the reservoir (3) prior to the fluid being returned to the reservoir.

7. Apparatus for carrying out the method according to one of the claims 1 to 6 comprising a reservoir (3) for the pressure fluid (3a) and a vacuum pump which is connected to said reservoir, characterized in that the vacuum pump is a liquid-sealed vacuum pump (1), the operating fluid (1b) (lubrificating and sealing fluid) of which is the same as the pressure fluid (3a) of the hydraulic system (4), wherein the temperature of the operating fluid (1b) of the vacuum pump (1) corresponds approximately with the temperature of the pressure fluid (3a) in the reservoir (3).

8. Apparatus according to claim 7, characterized in that there is provided a compensating pipe (16) connecting the reservoir (3) of the hydraulic system and an operating fluid container (1a) of the vacuum pump (1), one end (16a) of which pipe (16) is positioned below the fluid level in the operating fluid container (1a) and the other end (16b) of which lies above the fluid level in the reservoir (3), and wherein a valve (17) is provided in the compensating pipe (16), which valve (17) is controlled in response to the fluid level in the operating fluid container (1a).

9. Apparatus according to claim 8, characterized in that the valve (17) is controlled by a float (18a) of a float switch (18), which float (18a) is located in the operating fluid container (1a).

10. Apparatus according to claim 8 or 9, characterized in that the compensating pipe (16) terminates into the return line (8) of the hydraulic system upstream of the reservoir (3).

**Revendications**

1. Procédé pour le dégazage d'un liquide de pression d'un système hydraulique (4), un vide étant créé, au moyen d'une pompe à vide (1), dans l'espace libre (3b) surmontant le liquide de pression (3a) d'un récipient collecteur (3) contenant ce dernier, aspirant ainsi continuellement les gaz permanents contenus dans le liquide de pression (3a), caractérisé en ce que, au moyen d'une pompe à vide (1) à action sélective qui, en fait, pompe les gaz permanents, mais non la vapeur du liquide de pression concerné, on abaisse, à une valeur aussi faible que possible, la pression partielle des gaz permanents dans l'espace libre (3b) du récipient collecteur (3).

2. Procédé suivant la revendication 1, caractérisé en ce que la pression partielle des gaz permanents dans l'espace libre (3b) du récipient collecteur (3) est maintenue en dessous de 1 mbar.

3. Procédé suivant la revendication 1 ou 2, caractérisé en ce que les gaz permanents sont aspirés au moyen d'une pompe à vide (1) étanchéifiée par un liquide et dont le liquide de fonctionnement (1b) (liquide de lubrification et d'étanchéité) est le liquide de pression du système hydraulique.

4. Procédé suivant la revendication 3, caratérisé en ce que le liquide de fonctionnement (1b) de la pompe à vide (1) est maintenu à peu près à la même température que le liquide de pression (3a) se trouvant dans le récipient collecteur (3).

5. Procédé suivant une des revendications 1 à 4, caractérisé en ce qu'on fait passer le liquide de pression recyclé dans le récipient collecteur (3) à partir du système hydraulique (4) et/ou de la pompe à vide (1), sur une surface de dégazage en couche mince (9).

6. Procédé suivant une des revendications 1 à 5, caractérisé en ce que la chaleur absorbée dans le système hydraulique est évacuée du liquide de pression au moyen d'un dispositif de refroidissement (5) monté en amont du récipient collecteur (3) avant que ce liquide ne soit recyclé dans le récipient collecteur.

7. Dispositif pour la réalisation du procédé suivant une des revendications 1 à 6, ce dispositif comportant un récipient collecteur (3) pour le liquide de pression (3a), ainsi qu'une pompe à vide (1) raccordée à ce récipient, caractérisé en ce que la pompe à vide est une pompe à vide (1) étanchéifiée par un liquide et dont le liquide de fonctionnement (1b) (liquide de lubrification et d'étanchéité) est le même que le liquide de pression (3a) du système hydraulique (4), la température du liquide de fonctionnement (1b) de la pompe à vide (1) correspondant à peu près à celle du liquide de pression (3a) se trouvant dans le récipient collecteur (3).

8. Dispositif suivant la revendication 7, caractérisé en ce que, entre le récipient collecteur (3) du système hydraulique et un récipient (1a) pour le liquide de fonctionnement de la pompe à vide (1), est prévue une conduite de compensation (16) dont une embouchure (16a) est située en dessous du niveau du liquide de fonctionnement se trouvant dans le récipient (1a) et dont l'autre embouchure (16b) se situe au-dessus du niveau du liquide contenu dans le récipient collecteur (3), une soupape (17) commandée en fonction du niveau du liquide de fonctionnement se trouvant dans le récipient (1a) étant prévue dans la conduite de compensation (16).

9. Dispositif suivant la revendication 8, caractérisé en ce que la soupape (17) est commandée par un flotteur (18a) d'un commutateur (18), ce flotteur étant installé dans le récipient du liquide de fonctionnement.

10. Dispositif suivant la revendication 8 ou 9, caractérisé en ce que la conduite de compensation (16) débouche dans la conduite de recyclage (8) du système hydraulique devant le récipient collecteur (3).